# EUROPEAN PATENT APPLICATION

(11) **EP 2 143 685 A1**
(43) Date of publication of application: **13.01.2010**
(21) Application number: 08739030.8
(22) Date of filing: 27.03.2008
(51) Int. Cl.: C01B 3/38, H01M 8/04, H01M 8/06

(54) **REFORMING DEVICE AND FUEL CELL SYSTEM**

(30) Priority: 25.04.2007 JP 2007115809; 26.03.2008 JP 2008079585
(71) Applicant: Toyota Jidosha Kabushiki Kaisha, Toyota-shi Aichi 471-8571 (JP)
(72) Inventor: OHKAWARA, Hiroki, Kariya-shi Aichi 448-8650 (JP); TAKADA, Kazumasa, Kariya-shi Aichi 448-8650 (JP); HARADA, Shinya, Kariya-shi Aichi 448-8650 (JP); TOYONAGA, Norihiko, Kariya-shi Aichi 448-8605 (JP)
(74) Representative: TBK-Patent
(86) International application number: PCT/JP2008/055901
(87) International publication number: WO 2008/132922

(57) **Abstract**

In a reforming device and a fuel cell system, the object is to stabilize the ignition and combustion at a burner section regardless of the temperature of a reforming section by supplying the burner section with the combustible gas depending on the temperature of the reforming section at the time of a starting operation and after the generation of steam begins at an evaporator section.

At the time of a starting operation and after steam generation detecting means (steps 112, 118) detects the generation of steam, a control device of a reforming device executes a control to switch the combustions of at least first combustible gas and second combustible gas at the burner section based on the state of the burner section and the temperature of the reforming section at the time of detecting the generation of steam as well as on the temperature of the reforming section after the time subsequent thereto (steps 144, 102-106 and steps 144, 134-138).

## Description

### TECHNOLOGICAL FIELD:

The present invention relates to a reforming device and a fuel cell system.

### BACKGROUND ART:

As one form of reforming devices, there has been know one which is described in Patent Document 1. As shown in Figures 1 and 2 of Patent Document 1, the reforming device is provided with a reforming section 1 for producing reformed gas from a hydrocarbon based raw material gas and steam; a burner section 7 for heating the reforming section 1; an air blowing section 8 for supplying air to the burner section 7; reforming section temperature detecting means 13 for detecting the temperature of the reforming section 1; an evaporating section 3 for supplying the steam to the reforming section 1; a switch valve 11 for introducing the reformed gas produced in the reforming section 1 and/or the raw material gas which passed through the reforming section 1, into either the burner section 7 or an device 12 which utilizes the reformed gas; and control means 16 for purging the reforming section 1 with the raw material gas at the time of a starting up, for supplying the raw material gas, which passed through the reforming section 1, to the burner section 7 through the switching valve 11 to ignite the burner section 7 and for controlling the burner section 7 so that the temperature detected by the reforming section temperature detecting means 13 becomes equal to or lower than a first predetermined temperature at which carbon deposition reaction does not proceed.

In the reforming device of the kind above, before the generation of steam is detected at step S5, the following control is executed so that the reforming section 1 does not become a high temperature in the state of steam lacking. When the temperature of the reforming section does not go down to 350°C being the first prescribed temperature or lower by decreasing the quantity of natural gas or increasing the quantity of air from the air blowing section 8 at the time of a starting operation at step 4S, the control means 16 at step 15S closes a shut-off valve 15 to discontinue supplying the natural gas being the raw material. The temperature of the reforming section 1 is lowered by discontinuing the supplying of natural gas to stop the combustion of the burner section 7. Then, after the temperature of the reforming section 1 is detected to have gone down to about 300 °C, being one example of a third predetermined temperature in the present invention, or lower, the air blowing section 8 and an igniter (not shown) are brought into operation at step 17S, and the shut-off valve 15 is opened. Thereafter, the control means 16 brings a raw material supply section 2 into operation to supply raw material to the reforming section 1, so that the combustion at the burner section 7 can be resumed.

Further, after the generation of steam is detected at step 5S, the supply quantities of the raw material and water from a water supply section 4 are increased. Subsequently, at step 6S, the flow rate of combustible gas supplied to the burner section 7 is increased to raise the temperature of the reforming section 1 to a second predetermined temperature being 600 °C or higher at which a steam-reforming reaction proceeds.
Patent Document 1: Japanese unexamined, published patent application No. 2005-206395

### DISCLOSURE OF THE INVENTION:

### PROBLEM TO BE SOLVED BY THE INVENTION:

In the reforming device described in the aforementioned Patent Document 1, before the generation of steam, the temperature of the reforming section 1 is controlled to come in a low temperature range (300 °C to 350 °C) which is within the activation temperature limits for a catalyzer in the reforming section 1. However, there is contained no description but the control for making the temperature of the reforming section 1 equal to or higher than 600 °C by increasing the flow rate of combustible gas after the generation of steam. In the case of steam being generated, the rate of hydrogen in the reformed gas produced from the reforming section 1 varies in dependence on the temperature of the reforming section 1. That is, the rate of the hydrogen is relatively small if the temperature of the reforming section 1 is low (a temperature close to 350 °C) though it is relatively large if high (a temperature close to 600 °C). Accordingly, since the composition of the reformed gas supplied to the burner section 7 differs in dependence on the temperature of the reforming section, there is a possibility that ignition and combustion become unstable at the burner section 7.

The present invention has been made for solving the aforementioned problem, and an object thereof is to stabilize the ignition and combustion at the burner section regardless of the temperature of a reforming section in a reforming device and a fuel cell system by supplying the burner section with a combustible gas which depends on the temperature of the burner section, at the time of a starting operation and after the generation of steam begins at an evaporator section.

### MEASURES FOR SOLVING THE PROBLEM:

In order to solve the aforementioned problem, the structural feature of the invention according to Claim 1 resides in being provided with a reforming section for generating reformed gas by being supplied with reforming fuel and reforming water to supply the reformed gas to a fuel cell; an evaporator section for vaporizing reforming water for supply to the reforming section; a burner section provided with a first ejector for burning first combustible gas with combustion oxidizer gas by being supplied with the first combustible gas and a second ejector for burning second combustible gas in which hydrogen is more in rate than the first combustible gas, with combustion oxidizer gas by being supplied with the second combustible gas; switching means for switching a first route for supplying the first combustible gas to the first ejector and a second route for supply the second combustible gas to the second ejector; steam generation detecting means for detecting the generation of steam at the evaporation section; and combustion control means for controlling the switching of the combustions of at least the first combustible gas and the second combustible gas at the burner section at the time of a starting operation and after the steam generation detecting means detects the generation of steam, based on the state of the burner section and the temperature of the reforming section at the time of detecting the generation of steam as well as on the temperature of the reforming section at the time subsequent to such time.

The structural feature of the invention according to Claim 2 resides in that in Claim 1, where the state of the burner section at the time when the steam generation detecting means detects the generation of steam is a state of being supplied with combustion oxidizer gas only and where the temperature of the reforming section at the time of detecting the generation of steam is equal to or higher than a first predetermined temperature, the combustion control means controls the switching means to switch from the first route to the second route to burn the second combustible gas at the second ejector.

The structural feature of the invention according to Claim 3 resides in that in Claim 1, where the state of the burner section at the time when the steam generation detecting means detects the generation of steam is a state of being supplied with combustion oxidizer gas only and where the temperature of the reforming section at the time of detecting the generation of steam is lower than a first predetermined temperature, the combustion control means controls the switching means to switch to the first route to burn the first combustible gas at the first ejector, and that where the combustion causes temperature of the reforming section to become a second predetermined temperature or higher which is higher than the first predetermined temperature, the combustion control means controls the switching means to switch to the second route to burn the second combustible gas at the second ejector.

The structural feature of the invention according to Claim 4 resides in that in Claim 1, where the state of the burner section at the time when the steam generation detecting means detects the generation of steam is a combustion state in which the first combustible gas is being burned at the first ejector and where the temperature of the reforming section at the time when the steam generation detecting means detects the generation of steam is a second predetermine temperature or higher which is higher than the first predetermined temperature, the combustion control means controls the switching means to switch to the second route to burn the second combustible gas at the second ejector.

The structural feature of the invention according to Claim 5 resides in that in Claim 1, where the state of the burner section at the time when the steam generation detecting means detects the generation of steam is a combustion state in which the first combustible gas is being burned at the first ejector and where the temperature of the reforming section at the time when the steam generation detecting means detects the generation of steam is lower than a second predetermine temperature, the combustion control means controls the first ejector to burn the first combustible gas, and where the combustion causes temperature of the reforming section to become the second predetermined temperature or higher which is higher than the first predetermined temperature, the combustion control means controls the switching means to switch to the second route to burn the second combustible gas at the second ejector.

The structural feature of the invention according to Claim 6 resides in that in any one of Claims 3 to 5, in performing the switching from the combustion at the first ejector to the combustion at the second ejector, the combustion control means discontinues the combustion at the first ejector and after purging the burner section with combustion oxidizer gas, starts the combustion at the second ejector.

The structural feature of the invention according to Claim 7 resides in that in Claim 6, the combustion oxidizer gas purges the burner section and cools the reforming section and that the combustion control means decreases the flow rate of the combustion oxidizer gas for a purge just before starting the combustion at the second ejector, in comparison with the flow rate of the combustion oxidizer gas for a purge before starting the combustion at the second ejector and just before starting the combustion at the first ejector.

The structural feature of the invention according to Claim 8 resides in that in Claim 7, the combustion control means assumes one of the purges with the combustion oxidizer gas in which the reformed gas temperature at an outlet of the reforming section at the time of starting such one purge is equal to or higher than a third predetermined temperature, as a purge with the combustion oxidizer gas just before starting the combustion at the second ejector.

The structural feature of the invention according to Claim 9 resides in that in any one of Claims 1 to 6, the first route is a route which communicates with the first ejector without going through the reforming section, while the second route is a route which communicates with the second ejector by way of the reforming section.

The structural feature of the invention according to Claim 10 resides in that in any one of Claims 1 to 6, the first route and the second route are routes which after both going through the reforming section, branch to communicate respectively with the first ejector and the second ejector.

The structural feature of a fuel cell system according to Claim 11 resides in that the system uses as fuel gas the reformed gas which is discharged from the reforming device set forth in any one of Claims 1 to 10.

### EFFECTS OF THE INVENTION:

In the invention according to Claim 1 as constructed above, at the time of the starting operation and after the steam generation detecting means detects the generation of steam, the combustion control means executes the switching control of combustions with at least the first combustible gas and the second combustible gas at the burner section based on the state of the burner section and the temperature of the reforming section at the time of detecting the generation of steam as well as on the temperature of the reforming section at the time subsequent to such time. Therefore, where the temperature of the reforming section is relatively low at the time of the staring operation and after the generation of steam, the first combustible gas being relatively low in the rate of hydrogen becomes able to burn at the first ejector even when supplied to the burner section, so that it becomes possible to stabilize the ignition and combustion. Accordingly, by properly supplying the combustible gas depending on the temperature of the reforming section to the burner section at the time of the starting operation and after the generation of steam begins at the evaporation section, it can be realized to stabilize the ignition and combustion at the burner section regardless of the temperature of the reforming section.

In the invention according to Claim 2 as constructed above, in the invention according to Claim 1, where the state of the burner section at the time when the steam generation detecting means detects the generation of steam is the state of being supplied with combustion oxidizer gas only and where the temperature of the reforming section at the time of detecting the generation of steam is equal to or higher than the first predetermined temperature, the combustion control means controls the switching means to switch from the first route to the second route to burn the second combustible gas at the second ejector. Therefore, by properly supplying the combustible gas depending on the temperature of the reforming section to the burner section, it can be realized to stabilize the ignition and combustion at the burner section.

In the invention according to Claim 3 as constructed above, in the invention according to Claim 1, where the state of the burner section at the time when the steam generation detecting means detects the generation of steam is the state of being supplied with combustion oxidizer gas only and where the temperature of the reforming section at the time of detecting the generation of steam is lower than the first predetermined temperature, the combustion control means controls the switching means to switch to the first route to burn the first combustible gas at the first ejector, and where the combustion causes temperature of the reforming section to become the second predetermined temperature or higher which is higher than the first predetermined temperature, the combustion control means controls the switching means to switch to the second route to burn the second combustible gas at the second ejector. Therefore, by reliably and properly supplying the combustible gas depending on the temperature of the reforming section to the burner section, it can be realized to stabilize the ignition and combustion at the burner section.

In the invention according to Claim 4 as constructed above, in the invention according to Claim 1, where the state of the burner section at the time when the steam generation detecting means detects the generation of steam is a combustion state that the first combustible gas is being burned at the first ejector and where the temperature of the reforming section at the time when the steam generation detecting means detects the generation of steam is the second predetermine temperature or higher which is higher than the first predetermined temperature, the combustion control means controls the switching means to switch to the second route to burn the second combustible gas at the second ejector. Therefore, by reliably and properly supplying the combustible gas depending on the temperature of the reforming section to the burner section, it can be realized to stabilize the ignition and combustion at the burner section.

In the invention according to Claim 5 as constructed above, in the invention according to Claim 1, where the state of the burner section at the time when the steam generation detecting means detects the generation of steam is a combustion state that the first combustible gas is being burned at the first ejector and where the temperature of the reforming section at the time when the steam generation detecting means detects the generation of steam is lower than the second predetermine temperature, the combustion control means controls the first ejector to burn the first combustible gas, and where the combustion causes the temperature of the reforming section to become the second predetermined temperature or higher which is higher than the first predetermined temperature, the combustion control means controls the switching means to switch to the second route to burn the second combustible gas at the second ejector. Therefore, by reliably and properly supplying the combustible gas depending on the temperature of the reforming section to the burner section, it can be realized to stabilize the ignition and combustion at the burner section.

In the invention according to Claim 6 as constructed above, in the invention according to any one of Claims 3 to 5, in performing the switching from the combustion at the first ejector to the combustion at the second ejector, the combustion control means discontinues the combustion at the first ejector and after purging the burner section with combustion oxidizer gas, starts the combustion at the second ejector. Therefore, since the unstableness in the ignition and combustion due to switching the ejectors is suppressed, it can be realized to perform the ignition and combustion more stably.

In the invention according to Claim 7 as constructed above, in the invention according to Claim 6, the combustion oxidizer gas purges the burner section and cools the reforming section, and the combustion control means decreases the flow rate of the combustion oxidizer gas for the purge just before starting the combustion at the second ejector, in comparison with the flow rate of the combustion oxidizer gas for the purge before starting the combustion at the second ejector and just before starting the combustion at the first ejector. Thus, during the purse with the combustion oxidizer gas performed just before the combustion at the second ejector, the flow rate of the combustion oxidizer gas is decreased in comparison with that during the purge with the combustion oxidizer gas performed before that time, so that it can be realized to suppress an excessive drop in temperature of the reforming section caused by the combustion oxidizer gas accompanying the purge. Therefore, even when the purge causes the reforming section to go down in temperature, the going-down quantity can be suppressed, whereby the time is shortened for the reforming section to be reheated to a combustion starting temperature at the second ejector and hence, whereby it can be realized to shorten the time for the starting operation.

In the invention according to Claim 8 as constructed above, in the invention according to Claim 7, the combustion control means assumes one of the purges with the combustion oxidizer gas in which the reformed gas temperature at the outlet of the reforming section at the time of starting such one purge is equal to or higher than the third predetermined temperature, as the purge with the combustion oxidizer gas performed just before starting the combustion at the second ejector. Thus, since it is possible to reliably detect the purge with combustion oxidizer gas just before starting the combustion at the second ejector, it becomes possible to reliably decrease the flow rate for purge during the period of the purge with combustion oxidizer gas performed just before the combustion at the second ejector.

In the invention according to Claim 9 as constructed above, in the invention according to any one of Claims 1 to 6, the first route is the route which communicates with the first ejector without going through the reforming section, while the second route is the route which communicates with the second ejector by way of the reforming section. In this case, by properly supplying the burner section with the combustible gas depending on the temperature of the reforming section, it can be realized to stabilize the ignition and combustion at the burner section.

In the invention according to Claim 10 as constructed above, in the invention according to any one of Claims 1 to 6, the first route and the second route are the routes which after both going through the reforming section, branch to communicate respectively with the first ejector and the second ejector. In this case, by properly supplying the burner section with the combustible gas depending on the temperature of the reforming section, it can be realized to stabilize the ignition and combustion at the burner section.

In the invention of the fuel cell system according to Claim 11 as constructed above, it can be realized to operate the fuel cell system stably by using the reformed gas or the fuel gal which is supplied stably from the reforming section being stable in combustion operation.

### BRIEF DESCRIPTION OF THE DRAWINGS:

[Figure 1] is a schematic view showing the outline of a first embodiment of a fuel cell system to which a reforming device according to the present invention is applied.
[Figure 2] is a block diagram showing the reforming device shown in Figure 1.
[Figure 3] is a flow chart of a control program executed by a control device shown in Figure 2.
[Figure 4] is a time chart showing one example of the operation of the reforming device according to the flow chart shown in Figure 3.
[Figure 5] is a time chart showing one example of the operation of the reforming device according to the flow chart shown in Figure 3.
[Figure 6] is a time chart showing one example of the operation of the reforming device according to the flow chart shown in Figure 3.
[Figure 7] is a schematic view showing the outline of a second embodiment of the fuel cell system to which the reforming device according to the present invention is applied.
[Figure 8] is a schematic view showing the outline of a third embodiment of the fuel cell system to which the reforming device according to the present invention is applied.
[Figure 9] is a flow chart showing a first control modified form of the control program executed by the control device shown in Figure 2.
[Figure 10] is a time chart showing one example of the operation of the reforming device according to the flow chart shown in Figure 9.
[Figure 11] is a time chart showing one example of the operation of the reforming device according to the flow chart shown in Figure 9.
[Figure 12] is a time chart showing one example of the operation of the reforming device according to the flow chart shown in Figure 9.

### DESCRIPTION OF REFERENCE SYMBOLS:

10...fuel cell, 11...fuel pole, 12...air pole, 20...reforming device, 21...reforming section, 21c...temperature sensor, 22...cooler section (heat exchange section), 23...carbon monoxide shift reaction section (CO shift section), 23c...temperature sensor, 24...carbon monoxide selective oxidation reaction section (CO selective oxidizing section), 24b...temperature sensor, 25...burner section, 25a...first nozzle (first ejector), 25b...second nozzle (second ejector), 26...evaporator section, 26a...temperature sensor, 27...combustion gas flow passage, 28...heat-insulation section, 30...control device (combustion control means), 41...reforming fuel supply pipe, 42...fuel pump, 43...reforming fuel valve, 44,47...combustion fuel supply pipes, 45,48...combustion fuel valves, 46...desulfurizer, 51...steam supply pipe, 52...feedwater pipe, 53...reforming water pump, 54...reforming water valve, 61...oxidizing air supply pipe, 62...oxidizing air pump, 63...oxidizing air valve, 64...combustion air supply pipe, 65...combustion air pump, 66...combustion air valve, 67...cathode air supply pipe, 68...cathode air pump, 69...cathode air valve, 71,77...reformed gas supply pipes, 72...offgas supply pipe, 73...bypass pipe, 74...first reformed gas valve, 75...offgas valve, 76...second reformed gas valve, 78...third reforming gas valve, 81, 82...exhaust pipes, 89...connection pipe.

### PEEFERRED EMBODIMENTS FOR PRACTICING THE INVENTION:

### 1) First Embodiment:

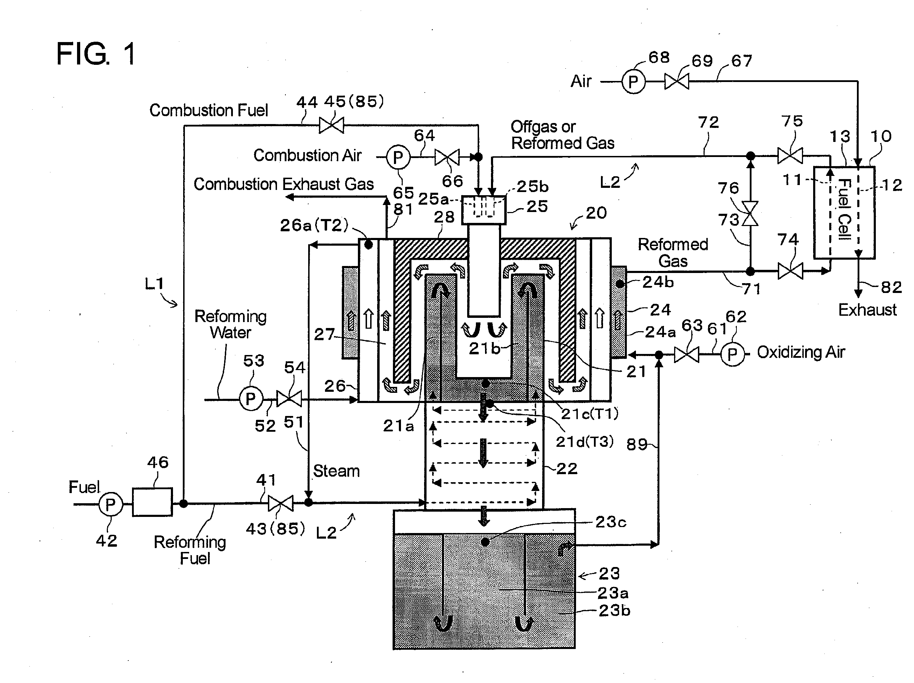

Hereafter, description will be made regarding a first embodiment of a fuel cell system to which a reforming device according to the present invention is applied. Figure 1 is a schematic view showing the outline of the fuel cell system. The fuel cell system is provided with a fuel cell 10 and a reforming device 20 for generating reformed gas containing hydrogen gas needed for the fuel cell 10.

The fuel cell 10 is provided with a fuel pole 11, an air pole 12 being an oxidizer pole, and electrolyte 13 interposed between both of the poles 11, 12 and is operable to generate electric power by using reformed gas supplied to the fuel pole 11 and air (cathode air) being oxidizer gas supplied to the air pole 12. Instead of air, there may be supplied oxygen-rich air gas.

The reforming device 20 is for reforming fuel with steam to supply hydrogen-rich reformed gas to the fuel cell 10 and is composed of a reforming section 21, a cooler section 22, a carbon monoxide shift reaction section (hereafter referred to as "CO shift section") 23, a carbon monoxide selective oxidation reaction section (hereafter referred to as "CO selective oxidizing section") 24, a burner section 25, and an evaporator section 26. As the reforming fuel, there may be employed reforming gaseous fuel such as natural gas, LPG or the like or reforming liquid fuel such as kerosene, gasoline, methanol or the like. The present first embodiment will be described in the form using natural gas.

The reforming section 21 generates and derives reformed gas from a mixture gas as reforming material in which reforming water is mixed with the reforming fuel. The reforming section 21 takes a bottomed cylindrical form and is provided in an annular cylinder with an annular turnover flow passage 21 a extending along the axis of the annular cylinder.

Catalyzer 21 b (e.g., Ru or Ni base catalyzer) is filled in the turnover flow passage 21a of the reforming section 21, in which a mixture gas of reforming fuel supplied from the cooler section 22 and steam supplied from a steam supply pipe 51 reacts through the catalyzer 21 b and is reformed to generate hydrogen gas and carbon monoxide gas (a so-called steam reforming reaction). At the same time, there takes place a so-called carbon monoxide shift reaction wherein the carbon monoxide, generated through the steam reforming reaction, and steam react to be metamorphosed into hydrogen gas and carbon dioxide. These generated gases (so-called reformed gases) are discharged to the cooler section (heat exchanger section) 22. The steam reforming reaction is an endothermic reaction, whereas the carbon monoxide shift reaction is an exothermic reaction. The active temperature limits of the catalyzer 21 b in the reforming section 21 range from 400 °C through 800 °C. Where the temperature of the reforming section 21 is within the active temperature limits of the catalyzer 21 b, more hydrogen is generated as the temperature increases.

Further, the reforming section 21 is provided therein with a temperature sensor 21 c for measuring the temperature in the reforming section 21 such as, e.g., the temperature (T1) in the neighborhood of a wall which is adjacent to the burner section 25. The temperature T1 of the reforming section 21 is a temperature which well reflects the combustion temperature of the burner section 25. The detection result of the temperature sensor 21 c is transmitted to a control device 30. Further, the outlet of the reforming section 21 is provided with a temperature sensor 21 d for measuring the temperature (the gas temperature at the outlet of the reforming section) T3 of the reformed gas discharged from the reforming section 21. The gas temperature T3 at the outlet of the reforming section is a temperature which well reflects the temperature of the catalyzer 21 b in the reforming section 21. The detection result of the temperature sensor 21 d is transmitted to the control device 30.

The cooler section 22 is a heat exchanger (heat exchange section) for performing heat exchange between the reformed gas discharged from the reforming section 21 and the mixture of reforming fuel and reforming water (steam). The cooler section 22 lowers the temperature of the high-temperature reformed gas with the low-temperature mixture gas to discharge the reformed gas to the CO shift section 23 while raising the temperature of the mixture gas with the reformed gas to discharge the mixture gas to the reforming section 21.

Specifically, the cooler section 22 has connected thereto a reforming fuel supply pipe 41 which is connected to a fuel supply source (e.g., a city gas pipe), not shown. The reforming fuel supply pipe 41 is provided thereon with a reforming fuel pump 42, a desulfurizer 46 and a reforming fuel valve 43 in order from the upstream side. The reforming fuel valve 43 operates to open or close the reforming fuel supply pipe 41. The reforming fuel pump 42 is reforming fuel supply means for supplying reforming fuel and for regulating the supply quantity. The desulfurizer 46 is for removing sulfur contents (e.g., sulfur compounds) in fuel. Of the fuel, the part which is supplied to the reforming section 21 to be reformed is referred to as reforming fuel, while the other part which is supplied to the burner section 25 to be burned is referred to as combustion fuel.

Further, a combustion fuel supply pipe 44 which is connected to a combustion air supply pipe 64 connected to the burner section 25 is connected between the desulfurizer 46 and the reforming fuel valve 43 on the reforming fuel supply pipe 41. The combustion fuel supply pipe 44 is provided with a combustion fuel valve 45 thereon. The combustion fuel valve 45 is for opening and closing the combustion fuel supply pipe 44. While the fuel pump 42 is being driven with the reforming fuel valve 43 closed and with the combustion fuel valve 45 opened, combustion fuel is supplied to the burner section 25. While the fuel pump 42 is being driven with the reforming fuel valve 43 opened and with the combustion fuel valve 45 closed, reforming fuel is supplied to the reforming section 21.

Further, the steam supply pipe 51 connected to the evaporator section 26 is connected between the reforming fuel valve 43 and the cooler section 22 on the fuel supply pipe 41. The steam supplied from the evaporator section 26 is mixed with reforming fuel, and the mixture gas is supplied to the reforming section 21 by way of the cooler section 22.

The CO shift section 23 is for reducing carbon monoxide in the reformed gas supplied from the reforming section 21 by way of the cooler section 22, that is, is a carbon monoxide reduction section. The CO shift section 23 is provided therein with a turnover flow passage 23a extending in a vertical direction. The turnover flow passage 23a is filled with catalyzer 23b (e.g., Cu-Zn base catalyzer). In the CO shift section 23, a so-called carbon monoxide shift reaction takes place, in which the carbon monoxide and the steam contained in the reformed gas supplied from the cooler section 22 react through the catalyzer 23b to be metamorphosed into hydrogen gas and carbon dioxide gas. This carbon monoxide shift reaction is an exothermic reaction.

Further, the CO shift section 23 is provided therein with a temperature sensor 23a for measuring the temperature in the CO shift section 23. The result of the temperature sensor 23a is transmitted to the control device 30.

The CO selective oxidizing section 24 is for further reducing the carbon monoxide in the reformed gas supplied from the CO shift section 23 to supply the reformed gas to the fuel cell 10, that is, is a carbon monoxide reduction section. The CO selective oxidizing section 24 takes an annular cylindrical form and is provided in contact with the outer circumferential wall of the evaporator section 26 to cover the outer circumferential wall. The CO selective oxidizing section 24 is filled therein with catalyzer 24a (e.g., Ru or Pt base catalyzer).

Further, the CO selective oxidizing section 24 is provided therein with a temperature sensor 24b for measuring the temperature in the CO selective oxidizing section 24. The result of the temperature sensor 24b is transmitted to the control device 30.

The CO selective oxidizing section 24 is connected at lower and upper portions of its lateral wall surface respectively to a connection pipe 89 connected to the CO shift section 23 and a reformed gas supply pipe 71 connected to the fuel pole 11 of the fuel cell 10. The connection pipe 89 has an oxidizing air supply pipe 61 connected thereto. Thus, the CO selective oxidizing section 24 can be supplied with the reformed gas from the CO shift section 23 and oxidizing air from the atmosphere. The oxidizing air supply pipe 61 is provided thereon with an oxidizing air pump 62 and an oxidizing air valve 63 in order from the upstream side. The oxidizing air pump 62 is for supplying oxidizing air and for regulating the supply quantity. The oxidizing air valve 63 operates to open or close the oxidizing air supply pipe 61.

Accordingly, the carbon monoxide in the reformed gas led to the CO selective oxidizing section 24 reacts to (is oxidized with) oxygen in the oxidizing air to become carbon dioxide. This reaction is an exothermic reaction and is expedited by the catalyzer 24a. Thus, the reformed gas is further reduced (less than 10 ppm) in the density of carbon monoxide through oxidation reaction and is supplied to the fuel pole 11 of the fuel cell 10.

The fuel pole 11 of the fuel cell 10 is connected at its inlet to the CO selective oxidizing section 24 through the reformed gas supply pipe 71 and at its outlet to the burner section 25 through an offgas supply pipe 72. A bypass pipe 73 bypasses the fuel cell 10 to make direct connection between the reformed gas supply pipe 71 and the offgas supply pipe 72. The reformed gas supply pipe 71 is provided thereon with a first reformed gas valve 74 between a branched point to the bypass pipe 73 and the fuel cell 10. The offgas supply pipe 72 is provided thereon with an offgas valve 75 between a merging point with the bypass pipe 73 and the fuel cell 10. The bypass pipe 73 is provided with a second reformed gas valve 76 thereon.

During a starting operation, the first reformed gas valve 74 and the offgas valve 75 are closed and the second reformed gas valve 76 is opened in order to avoid that the reformed gas being high in the density of carbon monoxide is supplied from the reforming device 20 to the fuel cell 10. During an ordinary operation (during a power generating operation), the first reformed gas valve 74 and the offgas valve 75 are opened and the second reformed gas valve 76 is closed in order to supply the reformed gas from the reforming device 20 to the fuel cell 10.

The air pole 12 of the fuel cell 10 is connected to a cathode air supply pipe 67 at its inlet and to an exhaust pipe 82 at its outlet. The air pole 12 is supplied with air, and offgas is exhausted. The cathode air supply pipe 67 is provided thereon with a cathode air pump 68 and a cathode air valve 69 in order from the upstream side. The cathode air pump 68 is for supplying cathode air and for regulating the supply quantity. The cathode air valve 69 operates to open or close the cathode air supply pipe 67.

The burner section 25 is provided with first and second nozzles 25a, 25b being first and second ejectors and is arranged with its lower end portion inserted, with a space, into the internal wall of the reforming section 21. The first ejector suits combustion fuel being large in the amount of heat, while the second ejector suits combustion fuel being smaller in the amount of heat than the combustion gas burned at the first ejector. As methods of changing the configuration of an ejector in dependence on the heat amount of combustion gas, there are a premixed combustion method used in the case of a large amount of head, a diffusion combustion method used in the case of a small amount of heat, a method of varying the aperture of an injection port of an ejector to that suiting the amount of heat, and the like. In the first embodiment shown in Figure 1, the first nozzle 25a being the first ejector is for use in the premixed combustion method and suits the combustion fuel (e.g., natural gas) before being reformed, while the second nozzle 25b being the second ejector is for use in the diffusion combustion method and suits reformed gas.

The combustion air supply pipe 64 is connected to the first nozzle 25a. The combustion air supply pipe 64 is provided thereon with a combustion air pump 65 and a combustion air valve 66 in order from the upper stream side. The combustion air pump 65 constitutes combustion oxidizer gas supply means for supplying combustion air being combustion oxidizer gas and for regulating the supply quantity. The combustion air valve 66 operates to open or close the combustion air supply pipe 64. As mentioned earlier, the combustion fuel supply pipe 44 is connected to the combustion air supply pipe 64, and when combustion fuel is being burned at the first nozzle 25a, the combustion fuel is premixed with combustion air. The combustion air is supplied from the atmosphere.

The second nozzle 25b has connected thereto the other end of the offgas supply pipe 72 whose one end is connected to the outlet of the fuel pole 11. The second nozzle 25b is supplied with the anode offgas from the fuel cell 10 or with the reformed gas which is supplied from the CO selective oxidizing section 24 without going through the fuel cell 10. When reformed gas or anode offgas is burned at the second nozzle 25b, it is burned with combustion air supplied from the first nozzle 25a.

Until steam is generated by the evaporator section 26 after the starting operation of the fuel cell system (reforming device 20), the fuel pump 42 is driven with the reforming fuel valve 43 closed and with the combustion fuel valve 45 opened, whereby combustion fuel is supplied to the first nozzle 25a of the burner section 25 and is burned thereat.

Until the starting operation is terminated after steam is generated, where the temperature of the reforming section 21 is lower than a predetermined temperature T1 b, the fuel pump 42 is driven with the reforming fuel valve 43 is closed and with the combustion fuel valve 45 opened, whereby combustion fuel is supplied to the first nozzle 25a of the burner section 25 and is burned thereat. On the other hand, where the temperature of the reforming section 21 is higher than the predetermined temperature T1b, the fuel pump 42 is driven with the reforming fuel valve 43 opened and with the combustion fuel valve 45 closed, and at the same time, the second reformed gas valve 76 is opened and the first reforming gas valve 74 and the offgas valve 75 are closed, whereby reformed gas from the CO selective oxidizing section 24 is supplied to the second nozzle 25b of the burner section 25 and is burned thereat.

During the ordinary operation of the fuel cell 10, the fuel pump 42 is driven with the reforming fuel valve 43 opened and with the combustion fuel valve 45 closed, and at the same time, the second reforming gas valve 76 is closed and the first reformed gas valve 74 and the offgas valve 75 are opened, whereby anode offgas (the reformed gas not used at the fuel pole 11 and containing hydrogen) discharged from the fuel cell 10 is supplied to the second nozzle 25b of the burner section 25 and is burned thereat.

When the burner section 25 constructed as above is ignited, combustion fuel, reformed gas or anode offgas being supplied thereto is burned with combustion air to generate high temperature combustion gas. This combustion gas is for heating the reforming section 21 to supply heat needed for steam reforming reaction. The combustion gas flows through a combustion gas flow passage 27 and is exhausted as combustion exhaust gas through an exhaust pipe 81. Thus, the combustion gas heats the reforming section 21 and the evaporator section 26 in this order. The combustion gas flow passage 27 is a flow passage which is arranged to go along the inner circumferential wall of the reforming section 21 in contact with the wall, then along between the outer circumferential wall of the reforming section 21 and a heat insulator section 28 in contact therewith after being turned, and finally along between the heat insulator section 28 and the evaporator section 26 in contact therewith after being turned.

The evaporator section 26 is for generating steam by vaporizing reforming water and for supplying the steam to the reforming section 21 by way of the cooler section 22. The evaporator section 26 is formed to take a cylindrical shape and is provided to cover the outer circumferential wall of the combustion gas flow passage 27 in contact with the wall.

The evaporator section 26 is connected at its lower portion (e.g., a lower part of the lateral wall surface or a bottom surface) to a feedwater pipe 52 which is connected to a reforming water tank (not shown). The evaporator section 26 is connected at its upper portion (e.g., an upper portion on the lateral wall surface) to the steam supply pipe 51. The reforming water led from the reforming water tank is heated with the heat of the combustion gas and the heat from the CO selective oxidizing section 24 in the course of flowing through the evaporator section 26 and is turned into steam to be led to the reforming section 21 through the steam supply pipe 51 and the cooler section 22. The feedwater pipe 52 is provided thereon with a reforming water pump 53 and a reforming water valve 54 in order from the upstream side. The reforming water pump 53 is for supplying reforming water to the evaporator section 26 and for regulating the supply quantity of the reforming water. The reforming water valve 54 operates to open or close the feedwater pipe 52.

Further, the evaporator section 26 is provided with a temperature sensor 26a for detecting the temperature (T2) of the steam in the evaporator section 26. The detection result of the temperature sensor 26a is transmitted to the control device 30. If possible to detect the temperature of the steam, the temperature sensor 26a may be provided, for example, in the vicinity of an inlet of the cooler section 22 or on the steam supply pipe 51 between the evaporator section 26 and the cooler section 22. The temperature TS of the steam is the temperature of the reforming water supplied to the reforming section 21.

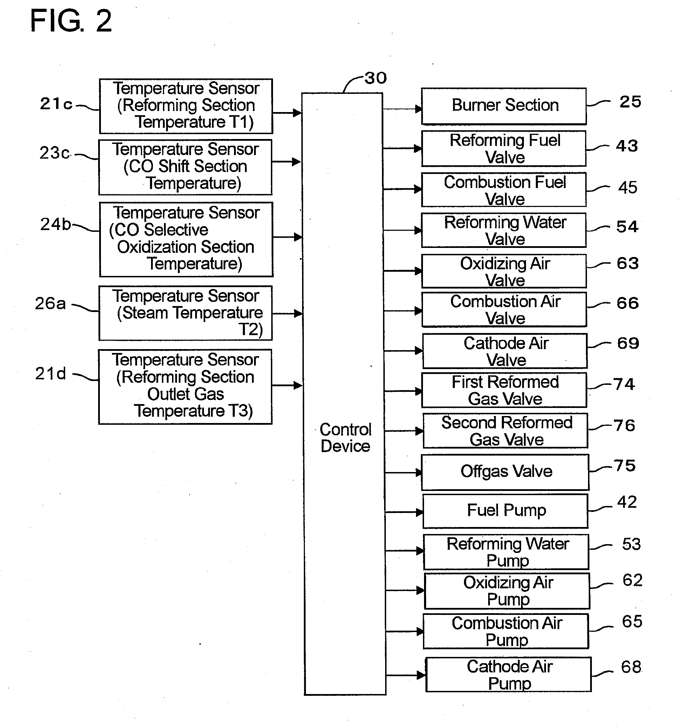

Further, the fuel cell system is provided with the control device 30, which has connected thereto the temperature sensors 21 c, 23c, 24b, 26a, the respective pumps 42, 53, 62, 65, 68, the respective valves 43, 45, 54, 63, 66, 69, 74, 75, 76, and the burner section 25 all aforementioned (refer to Figure 2). The control device 30 incorporates therein a microcomputer (not show), which has an input/output interface, a CPU, a RAM and a ROM (all not shown) connected thereto. The CPU executes the starting operation of the reforming device by controlling the respective pumps 42, 53, 62, 65, 68, the respective valves 43, 45, 54, 63, 66, 69, 74, 75, 76 and the burner section 25 based on the temperatures from the temperature sensors 21c, 23c, 24b, 26a, 21 d. The RAM temporally stores variables which are necessary to execute the program, and the ROM stores the program.

A first route L1 is a route for supplying combustion fuel being first combustible gas to the first nozzle 25a and is composed of the reforming fuel supply pipe 41, the combustion fuel supply pipe 44 and the combustion air supply pipe 64.

A second route L2 is a route for supplying reformed gas or anode offgas being second combustible gas to the second nozzle 25b and is referred to as a route composed of the reforming fuel supply pipe 41, the reforming device 20, the reformed gas supply pipe 71, the bypass pipe 73 and the offgas supply pipe 72 or as a route composed of the reforming fuel supply pipe 41, the reforming device 20, the reformed gas supply pipe 71, the fuel cell 10 and the offgas supply pipe 72.

A switching device 85 is switching means for switching the first route L1 and the second route L2 and is composed of the reforming fuel valve 43 and the combustion fuel valve 45. In substitution for this, there may be provided a three way valve at a branch point between the reforming fuel supply pipe 41 and the combustion fuel supply pipe 44.

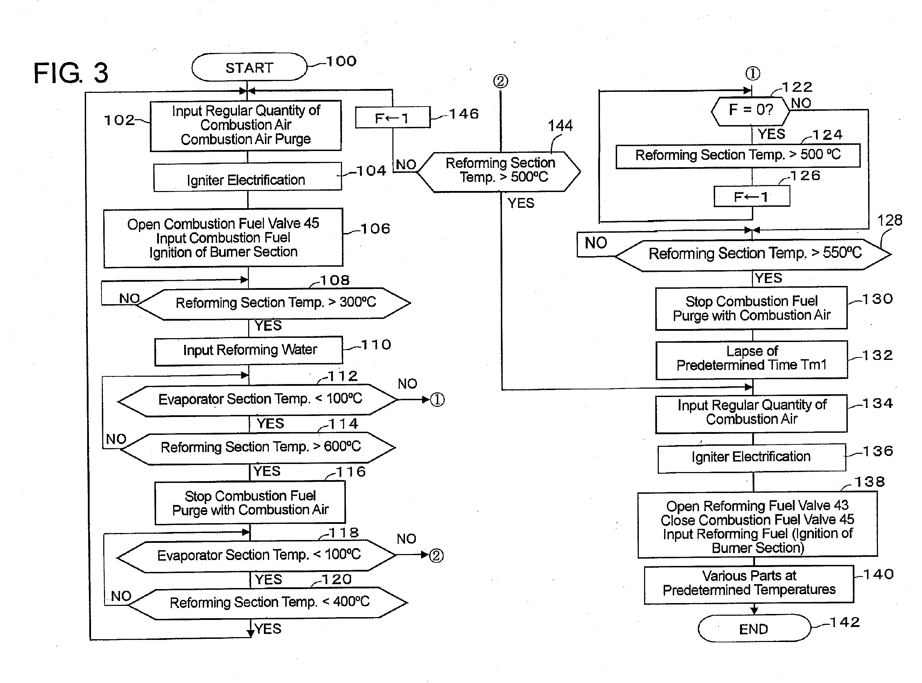

Next, the operation of the foregoing fuel cell system will be described with reference to Figure 3. When a start switch (not shown) is turned on, a starting operation is initiated (step 100). A flag F is reset to "0". The control device 30 starts the combustion with combustion fuel at the burner section 25. First of all, the control device 30 opens the combustion air valve 66 and drives the combustion air pump 65 to supply the burner section 25 with combustion air at a prescribed flow rate A1 which is determined in advance. Thus, the interior of the burner section 25 is purged with combustion air (step 102).

Then, the control device 30 electrifies an igniter (not show) built in the burner section 25 (step 104: a glow plug may be used in place of the igniter). The controller 30 stops electrifying the igniter after the lapse of a predetermined time from the time of detecting the ignition or of supplying combustion fuel. Further, the ignition may be done not only by ignition using an igniter or a glow plug but also by catalytic ignition.

Thereafter, the control device 30 ignites the burner section 25 by opening the combustion fuel valve 45 and driving the combustion pump 42 to supply the first nozzle 25a with combustion fuel at a prescribed flow rate B1 determined in advance (step 106). The combustion fuel is mixed with the combustion air having been supplied beforehand and is burned at the first nozzle 25a. At this time, the first reforming gas valve 74 and the offgas valve 75 have been closed, while the second reformed gas valve 76 has been opened.

When the combustion of the combustion fuel is started in this way, the reforming section 21 and the evaporation section 26 rise in their temperatures by being heated in this order with the combustion gas as the same goes through the combustion gas flow passage 27.

Then, since the control device 30 detects the temperature of the reforming section 21 by the temperature sensor 21 c (step 108), it makes judgment of "YES" at step 108 when the temperature of the reforming section 21 being heated rises to a predetermined temperature (300°C) or higher, and starts the supply of reforming water to the evaporator section 26 by opening the reforming water valve 54 and driving the reforming water pump 53 (step 110). The supply start of reforming water may be at the same time as the supply start of combustion fuel or after the lapse of a predetermined time regardless of the temperature of the reforming section 21.

Subsequently, if during combustion with combustion fuel, the temperature of the reforming section 21 rises higher than a predetermined temperature T1d (600°C) before the temperature of the evaporator section 26 goes up higher than a predetermined temperature T2b (100°C), the control device 30 stops supplying combustion fuel to the burner section 25 and increases the supply quantity (flow rate) of combustion air from A1 to A2 (step 116). The control device 30 detects the temperature of the evaporator section 26 by the temperature sensor 26a to judge whether being lower than the predetermined temperature T2b (100°C) or not (step 112), and makes judgment of "YES" to advance the program to step 114 if lower, but makes judgment of "NO" to advance the program to step 122 if higher. Further, the control device 30 detects the temperature of the reforming section 21 c by the temperature sensor 21 c to judge whether being higher than the predetermined temperature T1d (600°C) or not (step 114), and makes judgment of "NO" to return the program to step 112 if lower, but makes judgment of "YES" to advance the program 116 if higher.

Thereafter, if during combustion stop and the purge of the burner section 25, the temperature of the reforming section 21 goes down lower than a predetermined temperature T1a (400°C) which is lower than the predetermined temperature T1d before the temperature of the evaporator section 26 goes up higher than the predetermined temperature T2b (100°C), the control device 30 returns the program to step 102 and resumes the aforementioned combustion with the combustion fuel. The control device 30 detects the temperature of the evaporator section 26 by the temperature sensor 26a to judge whether being lower than the predetermined temperature T2b (100°C) or not (step 118), and makes judgment of "YES" to advance the program to step 120 if lower, but makes judgment of "NO" to advance the program to step 144 if higher. Further, the control device 30 detects the temperature of the reforming section 21 by the temperature sensor 21 c to judge whether being higher than the predetermined temperature T1a (400°C) or not (step 120), and makes judgment of "NO" to return the program to step 118 if higher, but makes judgment of "YES" to return the program to step 120 if lower.

In this way, the control device 30 executes the aforementioned combustion with combustion fuel and the purge with combustion air until the temperature of the evaporator section 26 goes up to the predetermined temperature T2b (100°C) or higher.

If the temperature of the evaporator section 26 goes up higher than the predetermined temperature T2b (100°C) during combustion with combustion fuel, the control device 30 makes judgment of "NO" at step 112 and detects that steam is being generated. At this time, since the flag F indicates "0", the control device 30 at step 124 judges whether or not the temperature of the reforming section 21 at the time of detecting the generation of steam is higher than a predetermined temperature T1b (500°C). It stores the result of the judgment. The flag F is a flag for representing whether the judgment of whether the temperature of the reforming section 21 at the time of detecting the generation of steam is higher than the predetermined temperature T1 b (500°C) or higher has been completed or not, and represents being unfinished of the judgment by "0" and being finished of it by "1".

The control device 30 sets the flag F to "1" after the processing of step 124 (step 126). Then, the control device 30 returns to the program to step 122, makes judgment of "NO" at step 122 and advances the program to step 128.

If the temperature of the reforming section 21 is higher than a predetermined temperature T1c (550°C) which is higher than the predetermined temperature T1b, the control device 30 makes judgment of "YES" at step 128, stops the combustion by discontinuing the supply of combustion fuel to the burner section 25 and performs a purge by increasing the supply quantity (flow rate) of combustion air from A1 to A2, as it does at step 116 (step 130). The predetermined temperature T1b has been set to a value which is higher than the predetermined temperature T1a but lower than predetermined temperature T1d and means the "first predetermined temperature" recited in the patent claim. The predetermined temperature T1c has been set to a value which is higher than the predetermined temperature T1b but lower than the predetermined temperature T1d and means the "second predetermined temperature" recited in the patent claim.

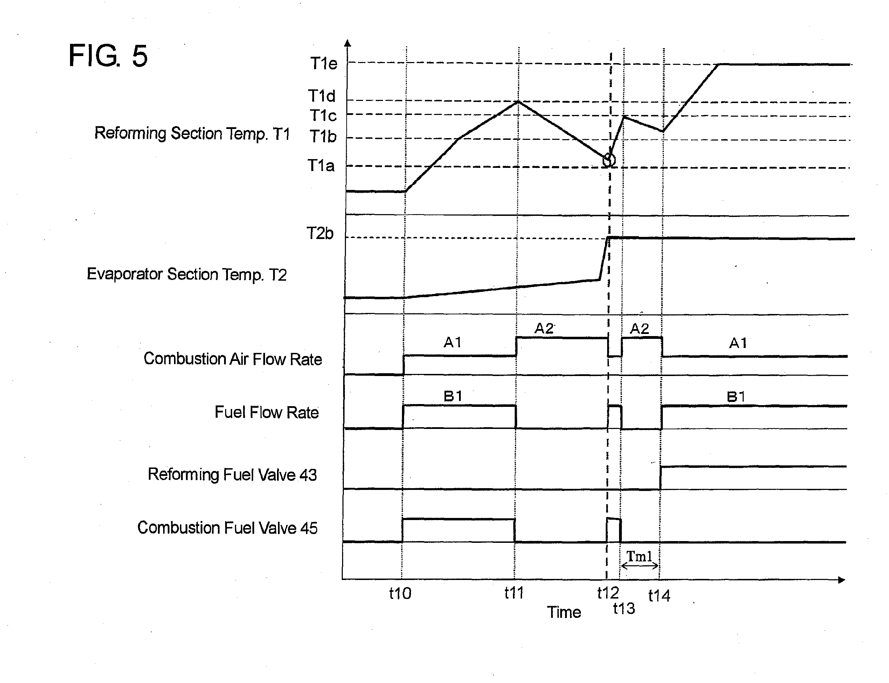

Then, the control device 30 waits for the lapse of a predetermined time Tm1 (e.g., the time between time t13 and time t14 shown in Figure 5) from the time of stopping the combustion (step 132) and starts the combustion of reformed gas at the burner section 25. Specifically, the control device 30 decreases the combustion air from A2 to A1 (step 134). The control device 30 electrifies the igniter (not shown) built in the burner section 25 as it does at step 104 (step 136). Subsequently, the control device 30 opens the reforming fuel valve 43, closes the combustion fuel valve 45 and drives the fuel pump 42 to supply the reforming section 21 with reforming fuel at a flow rate corresponding to the consumed power quantity (power quantity for the load) to ignite the burner section (step 138). At this time, the first reformed gas valve 74 and the offgas valve 75 have been closed, whereas the second reformed gas valve 76 has been opened. Further, oxidizing air has been supplied at a prescribed flow rate.

Then, since reforming fuel is reformed at the reforming section 21 which is within a relatively high temperature range of the active temperature limits of the catalyzer 21 a, the reformed gas generated has become hydrogen-rich. Carbon monoxide in the reformed gas is reduced at the CO shift section 23 and the CO selective oxidizing section 24, and the reformed gas is being supplied to the second nozzle 25b of the burner section 25 without going through the fuel cell 10. Accordingly, the reformed gas is burned at the burner section 25.

Then, when respective predetermined portions (the reforming section 21, the CO shift section 23 and the CO selective oxidizing section 24) of the reforming device 20 reach respective predetermined temperatures (step 140), the control device 30 terminates the starting operation (step 142), supplies the reformed gas from the CO selective oxidizing section 24 to the fuel cell 10 and starts power generation of the fuel cell 10. That is, a power generating operation (ordinary operation) is started. The starting of power generation may be judged by the fact that the carbon monoxide in the reformed gas becomes lower than a predetermined value.

Further, when the temperature of the evaporator section 26 goes up higher than the predetermined temperature T2b (100°C) during the combustion with combustion fuel, the control device 30 makes judgment of "NO" at step 112 to detect that steam is being generated. At this time, since the flag F indicates "0", the control device 30 at step 124 judges whether or not the temperature of the reforming section 21 at the time of detecting the generation of steam is higher than the predetermined temperature T1b (500°C), and stores the result of this judgment.

After the processing of step 124, the control device 30 sets the flag F to "1" (step 126). Then, the control device 30 returns the program to step 122, makes judgment of "NO" at step 122 and advances the program step 128.

At this time, if the temperature of the reforming section 21 is lower than the predetermined temperature T1c (550°C), the control device 30 continues to make judgment of "NO" at step 128 until the temperature of the reforming section 21 becomes higher than the predetermined temperature T1c (550°C). Then, when the temperature of the reforming section 21 becomes higher than the predetermined temperature T1c (550°C), the control device 30 makes judgment of "YES" at step 128 and executes the processing of the aforementioned step 130 and those following in the same manner as described above.

Further, when the temperature of the evaporator section 26 becomes higher than the predetermined temperature T2b (100°C) during the purge with combustion air at the burner section 25, the control device 30 makes judgment of "NO" at step 118 to detect that steam is being generated. At this time, if the temperature of the reforming section 21 is higher than the predetermined temperature T1b (500°C), the control device 30 makes judgment of "YES" at step 144 and advances the program to step 134.

Similarly to the above, the control device 30 decreases the combustion air from A2 to A1 (step 134). Similarly to step 104, the control device 30 electrifies the igniter (not shown) built in the burner section 25 (step 136). Then, the control device 30 opens the reforming fuel valve 43, closes the combustion fuel valve 45 and drives the fuel pump 42 to supply the reforming section 21 with reforming fuel at the flow rate corresponding to the consumed power quantity (power quantity for the load), so that the burner section 25 is ignited (step 138).

Further, when the temperature of the evaporator section 26 becomes higher than the predetermined temperature T2b (100°C) during the purge with combustion air at the burner section 25, the control device 30 makes judgment of "NO" at step 118 to detect that steam is being generated. At this time, if the temperature of the reforming section 21 is lower than the predetermined temperature T1b (500°C), the control device 30 makes judgment of "NO" at step 144 and, after setting the flag F to "1" at step 146, returns the program to step 102 to resume the aforementioned combustion with combustion fuel.

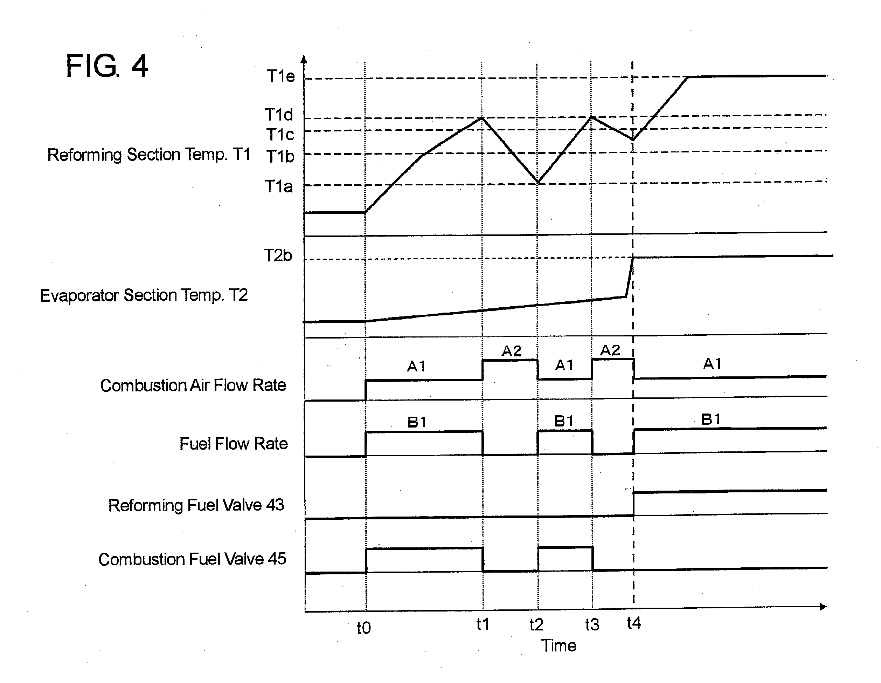

Further, the operation of the aforementioned fuel cell system will be described with reference to time charts shown in Figures 4 to 6. Figure 4 is a time chart in the case that the temperature of the evaporator section 26 becomes higher than the predetermined temperature T2b (100°C) during the purge of the burner section 25. In this case, the starting operation begins at time t0 (steps 102-106). That is, combustion air is supplied at the prescribed rate A1. The combustion fuel valve 45 is opened, whereby combustion fuel is supplied to the first nozzle 25a of the burner section 25 at the prescribed rate B1 having been predetermined in advance. Then, the combustion of combustion fuel is initiated at the burner section 25. Further, when the temperature of the reforming section 21 exceeds 300°C, reforming water is supplied (step 110).

When the temperature of the reforming section 21 rises to reach the predetermined temperature T1d (time t1), the combustion fuel valve 45 is closed, and the driving of the fuel pump 42 is stopped, whereby the combustion of combustion fuel is stopped (step 116). At the same time, the supply quantity of the combustion air is increased to A2 (step 116). When the temperature of the reforming section 21 goes down to reach the predetermined temperature T1 a (time t2), the combustion with combustion fuel is started again. Until the generation of steam is detected, such combustion of combustion fuel and the purge with combustion air of the burner section 25 are executed repetitively.

When the generation of steam is detected (time t4) with the temperature of the reforming section 21 being equal to or higher than the predetermined temperature T1b during the purge, the state of the burner section 25 at the time of detecting the generation of steam is a state that combustion air only is being supplied (during the purge) (judgment of "NO" at step 118), and the temperature of the reforming section 21 at the time of detecting the generation of steam is equal to or higher than the predetermined temperature T1 b (judgment of "YES" at step 144). Thus, the control device 30 opens the reforming fuel valve 43, closes the combustion fuel valve 45 and performs the switching to the second route L2 to burn reformed gas being the second combustible gas at the second nozzle 25b (step 132).

Figure 5 is a time chart in the case that the temperature of the evaporator section 26 becomes higher than the predetermined temperature T2b (100°C) during the purge of the burner section 25. In this case, the starting operation is initiated at time t10 (steps 102-106). That is, combustion air is supplied at the prescribed flow rate A1. The combustion fuel valve 45 is opened, and combustion fuel is supplied to the first nozzle 25a of the burner section 25 at the prescribed flow rate B1 having been set in advance. Then, the combustion of combustion fuel is initiated at the burner section 25.

When the temperature of the reforming section 21 rises to reach the predetermined temperature T1d (time t11), the combustion fuel valve 45 is closed, and the driving of the fuel pump 42 is stopped, whereby the combustion of combustion fuel is stopped (step 116). At the same time, the supply quantity of the combustion air is increased to A2 (step 116).

When the generation of steam is detected (time t12) with the temperature of the reforming section 21 being lower than the predetermined temperature T1b during the purge, the state of the burner section 25 at the time of detecting the generation of steam is a state that combustion air only is being supplied (during the purge) (judgment of "NO" at step 118), and the temperature of the reforming section 21 at the time of detecting the generation of steam is lower than the predetermined temperature T1b (judgment of "NO" at step 144). Thus, the control device 30 closes the reforming fuel valve 43, opens the combustion fuel valve 45 and performs the switching to the first route L1 to burn combustion fuel (first combustible gas) at the first nozzle 25a (steps 102-106).

When the combustion causes the temperature of the reforming section 21 to become equal to or higher than the predetermined temperature T1c (time t13: judgment of "YES" at step 128), the control device 30 closes the combustion fuel valve 45 to discontinue the combustion with combustion fuel (step 130) and waits for the lapse of the predetermined time Tm1 from the time of such discontinuation (step 132: after the purge at the prescribed flow rate A2). Then, the control device 30 opens the reforming fuel valve 43, closes the combustion fuel valve 45 and performs the switching to the second route L2 to start the combustion of reformed gas being the second combustible gas at the second nozzle 25b (time t14: step 134-138).

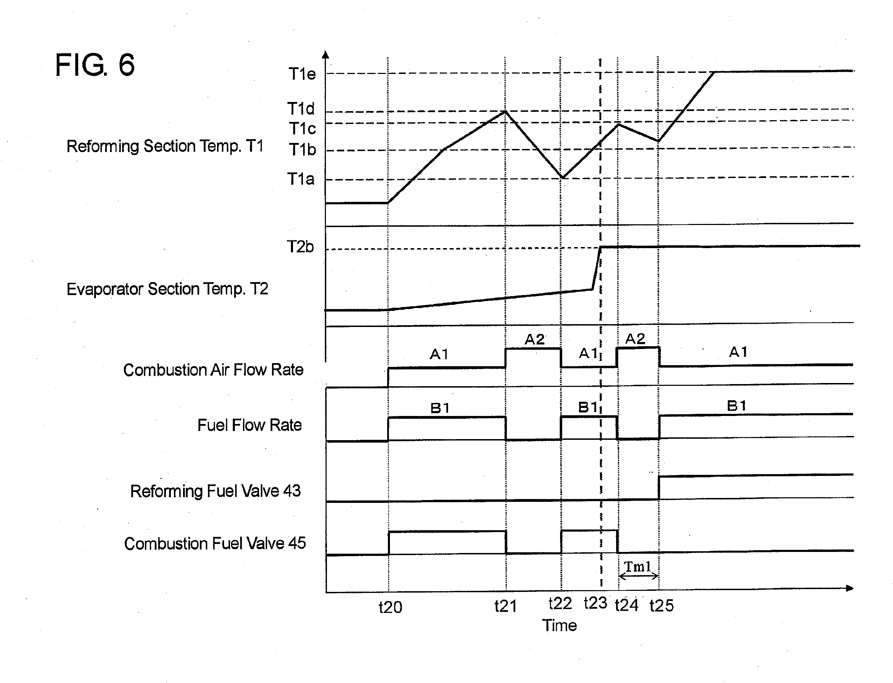

Figure 6 is a time chart in the case that the temperature of the evaporator section 26 becomes higher than the predetermined temperature T2b (100°C) during the combustion of combustion fuel at the burner section 25. In this case, the starting operations is initiated at time t20 (steps 102-106). That is, combustion air is supplied at the prescribed flow rate A1. The combustion fuel valve 45 is opened, and combustion fuel is supplied to the first nozzle 25a of the burner section 25 at the prescribed flow rate B1 having been set in advance. Then, the combustion of combustion fuel is initiated at the burner section 25.

When the temperature of the reforming section 21 rises to reach the predetermined temperature T1d (time t21), the combustion fuel valve 45 is closed, and the driving of the fuel pump 42 is stopped, whereby the combustion of combustion fuel is stopped (step 116). At the same time, the supply quantity of combustion air is increased to A2 (step 116). When the temperature of the reforming section 21 goes down to reach the predetermined temperature T1 a (time t22), the aforementioned combustion with combustion fuel is initiated again (steps 102-106). Until the generation of steam is detected, such combustion of combustion fuel and the purge with combustion air of the burner section 25 are executed repetitively.

When the generation of steam is detected (time t23) with the temperature of the reforming section 21 being equal to or higher than the predetermined temperature T1b during the combustion, the state of the burner section 25 at the time of detecting the generation of steam is the state of combustion, and the temperature of the reforming section 21 at the time of detecting the generation of steam is lower than the predetermined temperature T1c. Thus, the control device 30 continues the combustion at the first nozzle 25a until the temperature of the reforming section 21 becomes the predetermined temperature T1 c or higher (time t24: judgment of "YES" at step 128). After the temperature of the reforming section 21 reaches the predetermined temperature T1 c, the control device 30 closes the combustion fuel valve 45 to discontinue the combustion with combustion fuel (step 130) and waits the lapse of the predetermined time Tm1 from the time of such discontinuation (step 132). Then, (after the purge at the prescribed flow rate A2) the control device 30 opens the reforming fuel valve 43, closes the combustion fuel valve 45 and performs the switching to the second route L2 to initiate the combustion of reformed gas being the second combustible gas at the second nozzle 25b (time t25: steps 134-138).

In the case of Figure 6, when the generation of steam is detected with the temperature of the reforming section 21 being equal to or higher than the predetermined temperature T1c during the combustion, because the combustion causes the temperature of the reforming section 21 to be equal to or higher than the predetermined temperature T1 c, the control device 30 discontinues the combustion with the combustion fuel and waits for the lapse of the predetermined time Tm1 from the time of such discontinuation. Then, (after the purge at the prescribed flow rate A2) the control device 30 opens the reforming fuel valve 43, closes the combustion fuel valve 45 and performs the switching to the second route L2 to initiate the combustion of reformed gas being the second combustible gas at the second nozzle 25b.
It is to be noted that the processing at the aforementioned steps 112 and 118 constitute steam generation detecting means.

As is clear from the foregoing description, in this first embodiment, at the time of the starting operation and after the steam generation detecting means (steps 112 and 118) detects the generation of steam, combustion control means (the control device 30) controls the switching of combustions of at least the first combustible gas (combustion fuel) and the second combustible gas (reformed gas or anode offgas) at the burner section 25 based on the state of the burner section 25 and the temperature of the reforming section 21 at the time of detecting the generation of steam and the temperature of the reforming section 21 at the time subsequent thereto. Thus, at the starting operation and when the temperature of the reforming section 21 is relatively low after the generation of steam, the first combustible gas which is relatively little in the rate of hydrogen can be burned at the first nozzle 25a when supplied to the burner section 25, so that it becomes possible to stabilize the ignition and combustion thereof. Further, where the temperature of the reforming section 21 is relatively high, the second combustible gas which is relatively much in the rate of hydrogen can be burned at the second nozzle 25b when supplied to the burner section 25. Accordingly, by properly supplying the combustible gas which depends on the temperature of the reforming section 21, to the burner section 25 at the time of the starting operation and after the generation of steam begins at the evaporator section 26, it can be realized to stabilize the ignition and combustion at the burner section 25 regardless of the temperature of the reforming section 21.

Where the state of the burner section 25 at the time when the steam generation detecting means (steps 112 and 128) detects the generation of steam is the supply state of combustion oxidizer gas only and where the temperature of the reforming section 21 at the time of detecting the generation of steam is equal to or higher than the first predetermined temperature T1 b, the combustion control means (the control device 30) controls the switching means (the reforming fuel valve 43 and the combustion fuel valve 45) to switch from the first route L1 to the second route L2 to burn the second combustible gas at the second nozzle 25. Therefore, by properly supplying the combustible gas depending on the temperature of the reforming section 21 to the burner section 25, it can be realized to stabilize the ignition and combustion at the burner section 25.

Further, where the state of the burner section 25 at the time when the steam generation detecting means (steps 112 and 128) detects the generation of steam is the supply state of combustion oxidizer gas only and where the temperature of the reforming section 21 at the time of detecting the generation of steam is lower than the first predetermined temperature T1 b, the combustion control means (the control device 30) controls the switching means (the reforming fuel valve 43 and the combustion fuel valve 45) to switch to the first route L1 to burn the first combustible gas at the first nozzle 25a. Where the combustion causes the temperature of the reforming section 21 to become equal to or higher than the second predetermined temperature T1c which is higher than the first predetermined temperature T1 b, the combustion control means (the control device 30) controls the switching means (the reforming fuel valve 43 and the combustion fuel valve 45) to switch to the second route L2 to burn the second combustible gas at the second nozzle 25b. Therefore, by reliably and properly supplying the combustible gas depending on the temperature of the reforming section 21 to the burner section 25, it can be realized to stabilize the ignition and combustion at the burner section 25.

Further, where the state of the burner section 25 at the time when the steam generation detecting means (steps 112 and 128) detects the generation of steam is the combustion state that the first combustible gas is being burned at the first nozzle 25a and where the temperature of the reforming section 21 at the time of detecting the generation of steam is equal to or higher than the second predetermined temperature T1c which is higher than the first predetermined temperature t1b, the combustion control means (the control device 30) controls the switching means (the reforming fuel valve 43 and the combustion fuel valve 45) to switch to the second route L2 to burn the second combustible gas at the second nozzle 25b. Therefore, by reliably and properly supplying the combustible gas depending on the temperature of the reforming section 21 to the burner section 25, it can be realized to stabilize the ignition and combustion at the burner section 25.

Further, where the state of the burner section 25 at the time when the steam generation detecting means (steps 112 and 128) detects the generation of steam is the combustion state that the first combustible gas is being burned at the first nozzle 25a and where the temperature of the reforming section 21 at the time of detecting the generation of steam is lower than the second predetermined temperature T1 c, the combustion control means (the control device 30) makes the first nozzle 25a burn the first combustible gas and, where the combustion causes the temperature of the reforming section 21 to become equal to or higher than the second predetermined temperature T1c which is higher than the first predetermined temperature T1b, controls the switching means (the reforming fuel valve 43 and the combustion fuel valve 45) to switch to the second route L2 to burn the second combustible gas at the second nozzle 25b. Therefore, by reliably and properly supplying the combustible gas depending on the temperature of the reforming section 21 to the burner section 25, it can be realized to stabilize the ignition and combustion at the burner section 25.

Further, in performing the switching from the combustion at the first nozzle 25a to the combustion at the second nozzle 25b, the combustion control means (the control device 30) discontinues the combustion at the first nozzle 25a and, after purging the burner section 25 with combustion oxidizer gas (step 130, 132 or 116), starts the combustion at the second nozzle 25b (steps 134-138). Therefore, it can be realized to perform ignition and combustion more stably by suppressing the instability in ignition and combustion due to the switching of the nozzles.

Further, where the first route L1 is a route which communicates with the first nozzle 25a without going through the reforming section 21 while the second route L2 is a route which communicates with the second nozzle 25b by way of the reforming section 21, it can be realized to stabilize the ignition and combustion at the burner section 25 by properly supplying the combustible gas depending on the temperature of the reforming section 21 to the burner section 25.

Further, in the fuel cell system as constructed above, it is possible to operate the fuel cell system stably by the use of the reformed gas or fuel gas which is stably supplied from the reforming device 20 which is stable in combustion operation.

### 2) Second Embodiment:

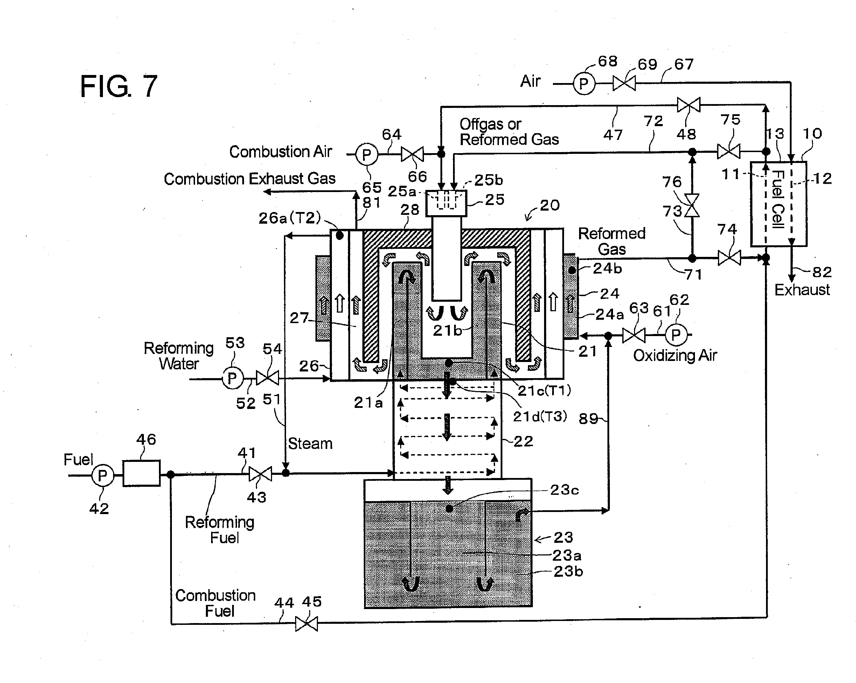

In the foregoing first embodiment, the first line L1 for supplying the burner section 25 with the combustion fuel which does not go through the reforming section 21 may be configured as a route which goes through the fuel cell 10 without going through the reforming section 21. In this instance, as shown in Figure 7, one end of the combustion fuel supply pipe 44 is connected to the reformed gas supply pipe 71 between the fuel cell 10 and the first reformed gas valve 74, and there is provided a combustion fuel supply pipe 47, which is connected at one end thereof to the offgas supply pipe 72 between the fuel cell 10 and the offgas valve 75 and at the other end thereof to the combustion air supply pipe 64 between the combustion air valve 66 and the burner section 25. The combustion fuel supply pipe 47 is provided thereon with a combustion fuel valve 48. The combustion fuel valve 48 is for opening and closing the combustion fuel supply pipe 47.

In this instance, combustion fuel is supplied to the first nozzle 25a by opening the combustion fuel valves 45, 48, and the supply of the combustion fuel to the first nozzle 25a is stopped by closing the combustion fuel valves 45, 48. In either time, the first reformed gas valve 74 and the offgas valve 75 remain closed. According to the second embodiment, similarly to the foregoing first embodiment, it can be realized to stabilize the ignition and combustion at the burner section 25 by properly supplying the combustible gas depending on the temperature of the reforming section 21 to the burner section 25.

### 3) Third Embodiment:

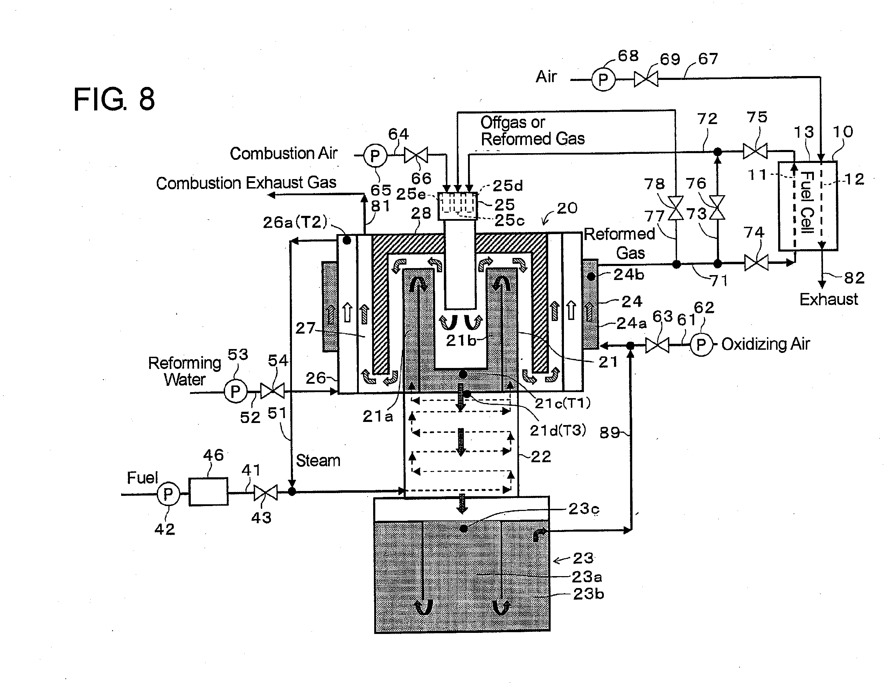

Further, in the foregoing first embodiment, the first route L1 and the second route L2 may be configured as routes which both go through the reforming section 21 and then branch to communicate respectively with the first nozzle 25c being the first ejector and the second nozzle 25d being the second ejector, as shown in Figure 8. In this instance, a first nozzle 25c has connected thereto a reformed gas supply pipe 77 which branches from the reformed gas supply pipe 71 between the CO selective oxidizing section 24 and a branch point to the bypass pipe 73. The reformed gas supply pipe 77 is provided thereon with a third reformed gas valve 78. The third reformed gas valve 78 is for opening and closing the reformed gas supply pipe 77. The combustion air supply pipe 64 is connected to a third nozzle 25e. Like the foregoing second nozzle 25b, a second nozzle 25d is connected to the offgas supply pipe 72. In this third embodiment, either of the first nozzle 25c and the second nozzle 25d is of a diffusion combustion method, and the first nozzle 25c is suitable for one ranging from ante-reformation combustion fuel (e.g., natural gas) to reformed gas which is low in the density of hydrogen, while the second nozzle 25d is suitable for reformed gas which is high in the density of hydrogen.

In this instance, after the starting operation of the fuel cell system and where ante-reformation combustion fuel (e.g., natural gas) or reformed gas which is low in the density of hydrogen is supplied from the reforming device 20 because the temperature of the reforming section 21 is relatively low, the first and second reformed gas valves 74, 76 and the offgas valve 75 are closed and the third reformed gas valve 78 is opened, whereby ante-reformation combustion fuel or reformed gas being low in the density of hydrogen is supplied to the first nozzle 25c. Further, after the starting operation of the fuel cell system and where reformed gas being high in the density of hydrogen is supplied from the reforming device 20 because the temperature of the reforming section 21 is relatively high, the first reformed gas valve 74, the offgas valve 75 and the third reformed gas valve 78 are closed and the second reformed gas valve 76 is opened, whereby the reformed gas being high in the density of hydrogen is supplied to the second nozzle 25d. This is because in the temperature range in use, more hydrogen is generated in the reforming section 21 as the temperature of the same rises higher. According to the third embodiment, it can be realized to stabilize the ignition and the combustion at the burner section 25 by properly supplying the combustible gas depending on the temperature of the reforming section 21 to the burner section 25.
The foregoing ejectors may be other devices than nozzles and may be any other devices capable of ejecting fluid from ejection ports thereof.

### 4) First Modified Form of Control

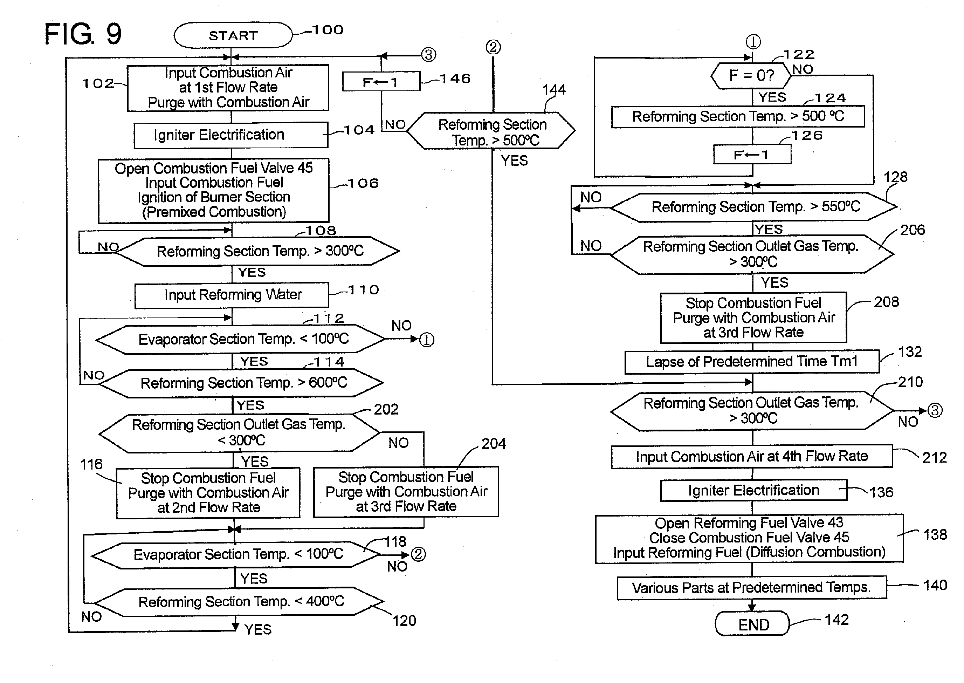

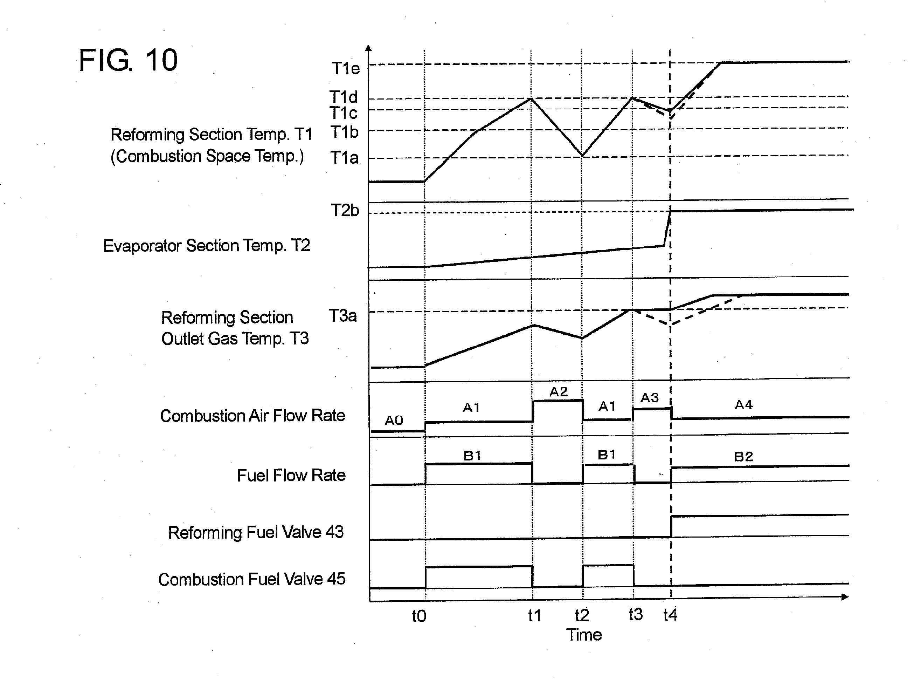

Next, with reference to Figures 9 and 10, description will be made regarding a first modified form of control wherein in the foregoing first embodiment, the combustion control means decreases the flow rate of combustion oxidizer gas for the purge just before the starting of combustion (diffusion combustion) at the second ejector (second nozzle 25d) in comparison with the flow rate of combustion oxidizer gas for the purge before the starting of combustion at the second ejector and just before the combustion (premixed combustion) at the first ejector (first nozzle 25c). In the present first modified form of control, the contents of the parts which are the same as those in the foregoing first embodiment will be omitted from being described, and the parts differing therefrom will be described.

The control device 30 determines the flow rate of combustion air to the burner section 25 while the combustion of the burner section 25 is stopped (during the purge), based on the gas temperature T3 at the outlet of the reforming section at the time of starting the combustion stop (at the time of starting the purge). Description will be made regarding the following three cases.

First of all, description will be made regarding a case (judgments of "YES" respectively at steps 112 and 114) that in a purge of the purges for the burner section 25 which purge is performed after the temperature T1 of the reforming section 21 reaches the predetermined temperature T1d (600°C), the temperature of the reforming section 21 is higher than the predetermined temperature T1b (500°C) when the temperature of the evaporator section 26 becomes higher than the predetermined temperature T2b (100°C).

Where the temperature of the reforming section 21 is higher than the predetermined temperature T1b when the temperature of the evaporator section 26 becomes higher than the predetermined temperature T2b, the control device 30 detects the gas temperature T3 at the outlet of the reforming section (step 202). Where the detected temperature is lower than a third predetermined temperature T3a (300 °C), the control device 30 makes judgment of "YES" at step 202, discontinues the supply of combustion fuel to the burner section 25 at step 116 and increases the flow rate of combustion air from A1 to A2 (second flow rate), as mentioned earlier. That is, because the gas temperature T3 at the outlet of the reforming section is lower than the third predetermined temperature T3a though the temperature of the reforming section 21 has become higher than the predetermined temperature T1b (for example, the state at time t1 in Figure 10), the control device 30 judges that the present purge is not a purge just before diffusion combustion, but a purge just before premixed combustion and sets the flow rate for the purge to the second flow rate A2.

On the other hand, where the gas temperature T3 at the outlet of the reforming section is equal to or higher than the third predetermined temperature T3a (300 °C), the control device 30 makes judgment of "NO" at step 202, discontinues the supply of combustion fuel to the burner section 25 and increase the flow rate of combustion air from A1 to A3 (third flow rate) at step 204. That is, since the gas temperature T3 at the outlet of the reforming section is equal to or higher than the third predetermined temperature T3a (e.g., the state at time t3 in Figure 10), the control device 30 judges that the present purge is not a purge just before premixed combustion but a purge just before diffusion combustion and sets the flow rate for the purge to the third flow rate A3.

The third flow rate A3 has been set to a value which is smaller than the second flow rate A2. An upper limit of the second flow rate A2 has been set so that the temperature of the reforming section 21 does not go down beyond the extent as required, while a lower limit thereof has been set so that the density of steam being supplied (regardless of much or less in the supply quantity) from the reforming section 21 is made to be a density for the burner section 25 to be ignited easier.

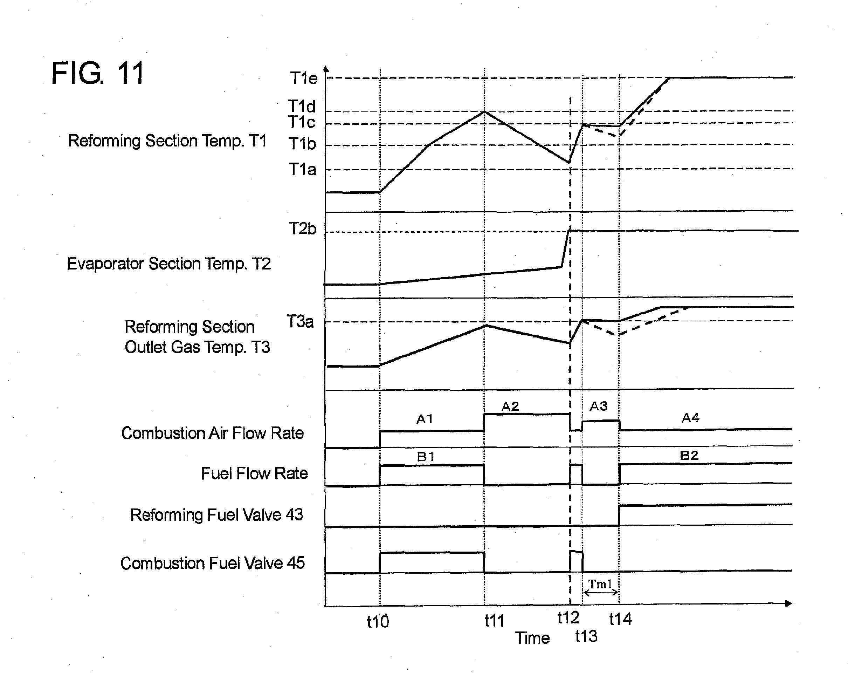

Second, description will be made regarding a case (judgments of "YES" and "NO" respectively at steps 118 and 144) that in a purge of the purges for the burner section 25 which purge is performed after the temperature T1 of the reforming section 21 reaches the predetermined temperature T1d (600°C), the temperature T1 of the reforming section 21 is lower than the predetermined temperature T1 b (500°C) at the time (time t12 in Figure 11) when the temperature of the evaporator section 26 becomes higher than the predetermined temperature T2b (100°C).

Where the temperature of the reforming section 21 is lower than the predetermined temperature T1b when the temperature of the evaporator section 26 becomes higher than the predetermined temperature T2b, the control device 30 resumes the premixed combustion (steps 102-106) after setting the flag F to "1" at step 146. In the present second case, since the temperature of the evaporator section 26 has already become higher than the predetermined temperature T2b, the control device 30 makes judgment of "NO" at step 112 and advances the program to step 122 and those subsequent thereto. At this time, since the flag F indicates "1", the control device 30 continues the premixed combustion until the temperature T1 of the reforming section 21 reaches the predetermined temperature T1c (550°C) and until the gas temperature T3 at the outlet of the reforming section reaches the third predetermined temperature T3a (300 °C) (from time t12 to time 13 in Figure 11).

If the temperature T1 of the reforming section 21 becomes higher than the predetermined temperature T1c and if the gas temperature T3 at the outlet of the reforming section becomes higher than the third predetermined temperature T3a, the control device 30 makes judgments of "YES" respectively at steps 128 and 206, discontinues the supply of combustion fuel to the burner section 25 and increases the flow rate of combustion air from A1 to A3 (third flow rate) at step 208. That is, since steam is being generated in the state and since the gas temperature T3 at the outlet of the reforming section is equal to or higher than the third predetermined temperature T3a (e.g., the state at time t13 in Figure 11), the control device 30 judges that the present purge is not a purge just before premixed combustion but a purge just before diffusion combustion and sets the flow rate for the purge to the third flow rate A3.

Third, description will be made regarding a case (judgment of "NO" at step 112 and a waiting processing at step 124) that in the premixed combustion of the burner section 25, the temperature of the reforming section 21 is lower than the predetermined temperature T1c (550°C) when the temperature of the evaporator section 26 becomes higher than the predetermined temperature T2b (100°C).

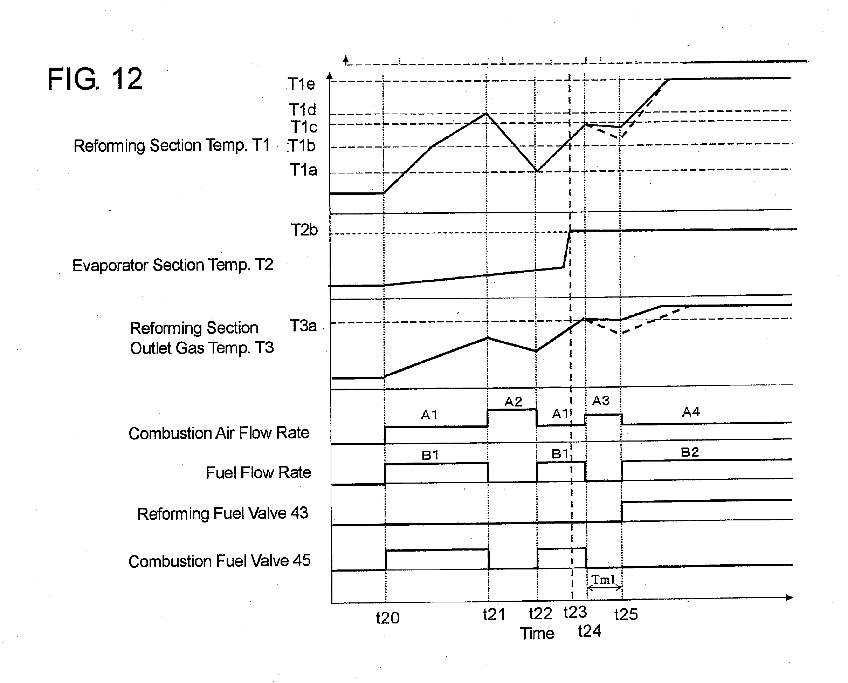

At the time (time t23 in Figure 12) when temperature of the evaporator section 26 becomes higher than the predetermined temperature T2b, the control device 30 makes judgment of "NO" at step 112 and advances the program to step 122 and those subsequent thereto. At this time, since the flag F indicates "0", the control device 30, similarly to the foregoing, judges whether or not the temperature of the reforming section 21 at the time of detecting the generation of steam is higher than the predetermined temperature T1b (500°C). After setting the flag F to "1" (step 126), the control device 30 continues the premixed combustion until the temperature T1 of the reforming section 21 reaches the predetermined temperature T1c (550°C) and until the gas temperature T3 at the outlet of the reforming section reaches the third predetermined temperature T3a (300 °C) (from time t23 to time 24 in Figure 12).

If the temperature T1 of the reforming section 21 becomes higher than the predetermined temperature T1c and if the gas temperature T3 at the outlet of the reforming section becomes higher than the third predetermined temperature T3a, the control device 30 makes judgments of "YES" respectively at steps 128 and 206, discontinues the supply of combustion fuel to the burner section 25 and increases the flow rate of combustion air from A1 to A3 (third flow rate) at step 208. That is, since steam is being generated in the state and since the gas temperature T3 at the outlet of the reforming section is equal to or higher than the third predetermined temperature T3a (e.g., the state at time t24 in Figure 12), the control device 30 judges that the present purge is not a purge just before premixed combustion but a purge just before diffusion combustion and sets the flow rate for the purge to the third flow rate A3.

In the premixed combustion of the burner section 25, where the temperature of the reforming section 21 is higher than the predetermined temperature T1 c (550°C) when the temperature of the evaporator section 26 becomes higher than the predetermined temperature T2b (100°C) and if the gas temperature T3 at the outlet of the reforming section is higher than the third predetermined temperature T3a, the control device 30 discontinues the supply of combustion fuel to the burner section 25 not to continue the premixed combustion and increases the flow rate of the combustion air from A1 to A3 (third flow rate).

Where the gas temperature T3 at the outlet of the reforming section is higher than 300 °C after the processing at steps 144 and 132, that is, where the state in which the gas temperature T3 at the outlet of the reforming section is higher than 300 °C is being continued at the time when the purge at the third flow rate through the processing at steps 204 and 208 is terminated, the control device 30 makes judgment of "YES" at step 210 and moves to diffusion combustion. On the contrary, where the gas temperature T3 at the outlet of the reforming section is lower than 300 °C after the processing at steps 144 and 132, that is, where the state in which the gas temperature T3 at the outlet of the reforming section is higher than 300 °C is not being continued at the time when the purge at the third flow rate through the processing at steps 204 and 208 is terminated, the control device 30 makes judgment of "NO" at step 210 and returns the program to step 102 to resume the premixed combustion. With this, it becomes possible to reliably secure the reforming section 21 in the state which is ready to move to the diffusion combustion and hence, it becomes possible to shorten the time for the starting operation.

Further, in the diffusion combustion, the control device 30 sets the flow rate of fuel to B2 and the flow rate of combustion air to A4 (step 212). The flow rate A4 is set to a value suitable for the diffusion combustion. The flow rate B2 is set in dependence on the second ejector 25b and the rate to combustion air.

As shown in Figures 10 to 12, the reforming section temperature T1 on the top row in each figure represents by the solid line the temperature change in the present modified form of control and represents by the broken line the temperature change in the case that the flow rate for the purge just before the diffusion combustion is not decreased (in the case of the foregoing first embodiment). As is apparent from these, it can be understood that the decrease in the flow rate for the purge results in suppressing the temperature going-down of the reforming section temperature T1. Further, as the purge period (e.g., time t3 to time t4 in Figure 10, time t13 to time t14 in Figure 11 or time t24 to time t25 in Figure 12) just before the diffusion combustion is compared with the purge period (e.g., time t1 to time t2 in Figure 10, time t11 to time t12 in Figure 11 or time t21 to time t22 in Figure 12) just before the premixed combustions prior to the purge period, it can be understood that the going-down of the reforming section temperature T1 is suppressed in the purge period just before the diffusion combustion rather than in the purge period just before the premixed combustion.

Further, the gas temperature T3 at the outlet of the reforming section on the third row in each of Figures 10 to 12 represents by the solid line the temperature change in the present modified form of control and represents by the broken line the temperature change in the case that the flow rate for the purge just before the diffusion combustion is not decreased (in the case of the foregoing first embodiment). As is apparent from these, it can be understood that the decrease in the flow rate for the purge results in suppressing the temperature going-down of the gas temperature T3 at the outlet of the reforming section. Further, as the purge period (e.g., time t3 to time t4 in Figure 10, time t13 to time t14 in Figure 11 or time t24 to time t25 in Figure 12) just before the diffusion combustion is compared with the purge period (e.g., time t1 to time t2 in Figure 10, time t11 to time t12 in Figure 11 or time t21 to time t22 in Figure 12) just before the premixed combustion prior to the purge period, it can be understood that the going-down of the gas temperature T3 at the outlet of the reforming section is suppressed in the purge period just before the diffusion combustion rather than in the purge period just before the premixed combustion.

As described above, according to the foregoing first modified form of control, the combustion control means (the control device 30) decreases the flow rate of combustion oxidizer gas for the purge just before starting combustion (diffusion combustion) at the second ejector 25b in comparison with the flow rate of combustion oxidizer gas for the purge before combustion at the second ejector 25b and just before starting combustion (premixed combustion) at the first ejector 25a. With this, the flow rate of combustion oxidizer gas during the purge period (e.g., time t3 to time t4 in Figure 10, time t13 to time t14 in Figure 11 or time t24 to time t25 in Figure 12) with combustion oxidizer gas just before combustion at the second ejector 25b can be decreased in comparison with that during the purge period (e.g., time t1 to time t2 in Figure 10, time t11 to time t12 in Figure 11 or time t21 to time t22 in Figure 12) with combustion oxidizer gas before that time, whereby the temperature of the reforming section 21 can be restricted from being lowered with combustion oxidizer gas involved in the purge beyond the extent as required. Therefore, even when the purge causes the reforming section 21 to go down in temperature, the time which is needed for the reforming section 21 to be heated again and to reach the combustion (diffusion combustion) starting temperature at the second ejector 25b can be shortened by restricting the degree of the temperature going-down to a small value, and hence, it can be realized to shorten the time for the starting operation. Further, where the generation of steam is not detected though the reforming section 21 has reached the combustion starting temperature at the second ejector 25b, the period during which the generation of steam is detectable is secured as long as possible to prevent the combustion at the first ejector 25a from being resumed, by suppressing the temperature going-down of the reforming section 21 to hold the same at a high temperature as far as possible. As a result, it can be realized to shorten the time for a starting operation.

Further, the combustion control means (the control device 30) assumes one of the purges with combustion oxidizer gas in which the reformed gas temperature at the outlet of the reforming section 21 is equal to or higher than the third predetermined temperature T3a at the time of stating the purge (e.g., time t3 in Figure 10, time 13 in Figure 11 or time 24 in Figure 12), as the purge with combustion oxidizer gas just before the starting of the combustion (diffusion combustion) at the second ejector 25b. Thus, reliable detection can be done of the purge with combustion oxidizer gas just before the starting of the combustion (diffusion combustion) at the second ejector 25b, so that it becomes possible to reliably decrease the flow rate for the purge during the purge period with the combustion oxidizer gas just before the combustion (diffusion combustion) at the second ejector 25b.

### INDUSTRIAL APPLICABILITY:

As described above, a reforming device and a fuel cell system according to the present invention are useful in stabilizing the ignition and combustion at a burner section regardless of the temperature of a reforming section by supplying the burner section with the combustible gas depending on the temperature of the reforming section at the time of a starting operation and after the generation of steam begins at an evaporator section.

## Claims

1. A reforming device **characterized by** being provided with:
a reforming section for generating and supplying reformed gas to a fuel cell by being supplied with reforming fuel and reforming water;
an evaporator section for vaporizing the reforming water for supply to the reforming section;
a burner section provided with a first ejector for burning first combustible gas with combustion oxidizer gas by being supplied with the first combustible gas and a second ejector for burning second combustible gas which is higher in the rate of hydrogen than the first combustible gas by being supplied with the second combustible gas, for heating the reforming section with combustion gas generated;
switching means for switching a first route for supplying the first combustible gas to the first ejector and a second route for supplying the second combustible gas to the second ejector;
steam generation detecting means for detecting the generation of steam at the evaporator section; and
combustion control means for controlling the switching of combustions of at least the first combustible gas and the second combustible gas at the burner section at the time of a starting operation and after the steam generation detecting means detects the generation of steam, based on the state of the burner section and the temperature of the reforming section at the time of detecting the generation of steam as well as on the temperature of the reforming section at the time subsequent to such time.

2. The reforming device as set forth in Claim 1, **characterized in that**
where the state of the burner section at the time when the steam generation detecting means detects the generation of steam is a state of being supplied with the combustion oxidizer gas only and where the temperature of the reforming section at the time of detecting the generation of steam is equal to or higher than a first predetermined temperature, the combustion control means controls the switching means to switch from the first route to the second route to burn the second combustible gas at the second ejector.

3. The reforming device as set forth in Claim 1, **characterized in that**
where the state of the burner section at the time when the steam generation detecting means detects the generation of steam is a state of being supplied with the combustion oxidizer gas only and where the temperature of the reforming section at the time of detecting the generation of steam is lower than the first predetermined temperature, the combustion control means controls the switching means to switch to the first route to burn the first combustible gas at the first ejector; and that where the combustion causes the temperature of the reforming section to become a second temperature or higher which is higher than the first predetermined temperature, the combustion control means controls the switching means to switch to the second route to burn the second combustible gas at the second ejector.

4. The reforming device as set forth in Claim 1, **characterized in that**
where the state of the burner section at the time when the steam generation detecting means detects the generation of steam is a combustion state in which the first combustible gas is being burned at the first ejector and where the temperature of the reforming section at the time when the steam generation detecting means detects the generation of steam is a second predetermined temperature or higher which is higher than the first predetermined temperature, the combustion control means controls the switching means to switch to the second route to burn the second combustible gas at the second ejector.

5. The reforming device as set forth in Claim 1, **characterized in that**
where the state of the burner section at the time when the steam generation detecting means detects the generation of steam is a combustion state in which the first combustible gas is being burned at the first ejector and where the temperature of the reforming section at the time when the steam generation detecting means detects the generation of steam is lower than a second predetermined temperature, the combustion control means burns the first combustible gas at the first ejector; and
that where the combustion causes the temperature of the reforming section to become the second temperature or higher which is higher than the first predetermined temperature, the combustion control means controls the switching means to switch to the second route to burn the second combustible gas at the second ejector.

6. The reforming device as set forth in any one of Claims 2 to 5,
**characterized in that** in performing the switching from the combustion at the first ejector to the combustion at the second ejector, the combustion control means discontinues the combustion at the first ejector and after purging the burner section with the combustion oxidizer gas, starts the combustion at the second ejector.

7. The reforming device as set forth in Claim 6, **characterized in that** the combustion oxidizer gas purges the burner section and cools the reforming section and that the combustion control means decreases the flow rate of the combustion oxidizer gas for a purge just before starting the combustion at the second ejector, in comparison with the flow rate of the combustion oxidizer gas for a purge before starting the combustion at the second ejector and just before starting the combustion at the first ejector.

8. The reforming device as set forth in Claim 7, **characterized in that** the combustion control means assumes one of the purges with combustion oxidizer gas in which the reformed gas temperature at an outlet of the reforming section at the time of starting such one purge is equal to or higher than a third predetermined temperature, as a purge with the combustion oxidizer gas just before starting the combustion at the second ejector.

9. The reforming device as set forth in any one of Claims 1 to 6,
**characterized in that** the first route is a route which communicates with the first ejector without going through the reforming section, while the second route is a route which communicates with the second ejector by way of the reforming section.

10. The reforming device as set forth in any one of Claims 1 to 6,
**characterized in that** the first route and the second route are routes which after both going through the reforming section, branch to communicate respectively with the first ejector and the second ejector.

11. A fuel cell system **characterized by** using as fuel gas the reformed gas which is discharged from the reforming device as set forth in any one of Claims 1 to 10.
